# EUROPÄISCHE PATENTSCHRIFT

(11) **EP 0 962 668 B1**
(45) Veröffentlichungstag und Bekanntmachung des Hinweises auf die Patenterteilung: **15.09.2004**
(21) Anmeldenummer: 99109401.2
(22) Anmeldetag: 10.05.1999
(51) Int. Cl.: F16C 13/02

(54) **Druckbehandlungswalze**
Pressure roll
Rouleau de pression

(30) Priorität: 16.05.1998 DE 19822144
(43) Veröffentlichungstag der Anmeldung: 08.12.1999
(73) Patentinhaber: Voith Paper Patent GmbH, 89522 Heidenheim (DE)
(72) Erfinder: Van Haag, Rolf, Dr.-Ing., 47647 Kerken (DE); Wenzel, Reinhard, 47809 Krefeld (DE)
(74) Vertreter: Knoblauch, Andreas, Dr.-Ing.

(56) Entgegenhaltungen:
- WO-A-95/08067
- DE-A- 1 525 252
- DE-A- 1 575 399
- GB-A- 2 143 302

## Beschreibung

Die Erfindung betrifft eine Druckbehandlungswalze mit einem Walzenmantel, der über eine Lageranordnung drehbar auf einem Träger gelagert ist, wobei die Lageranordnung mindestens eine hydrostatisch abgestütze Lagerfläche aufweist, die mit einer Gegenfläche einen Spalt bildet und deren Flächennormale zumindest eine axial gerichtete Komponente aufweist.

Eine derartige Druckbehandlungswalze ist aus DE 33 48 209 C2 bekannt.

Derartige Walzen sind für zahlreiche Anwendungszwecke geeignet, beispielsweise für Kalander, Glättwerke, Pressenpartien von Papier-, Zellstoff- und Druckmaschinen oder Walzwerke für Stahl, Kunststoff u.dgl. Hierbei wirkt die Walze mit einer Gegenwalze zusammen, so daß in dem Walzenspalt zwischen den beiden Walzen eine Materialbahn hindurchgeführt und unter Druck behandelt werden kann.

Hierbei besteht die Gefahr, daß sich der Walzenmantel durchbiegt und dementsprechend ein über die axiale Länge der Walze ungleichmäßiger Walzenspalt entsteht. Um dem entgegenzuwirken, sind bei derartigen Druckbehandlungswalzen in der Regel Mittel vorgesehen, die der Durchbiegung des Walzenmantels entgegen wirken. Dies können beispielsweise Stützschuhe sein, die zwischen dem Walzenmantel und dem Träger angeordnet sind. Man kann auch das hohle Innere des Walzenmantels in zwei oder mehr Kammern in Umfangsrichtung unterteilen und die Kammer, die dem Walzenspalt benachbart ist, unter den Druck einer hydraulischen Flüssigkeit setzen.

In allen Fällen, in denen im Innern des Walzenmantels ein erhöhter Druck herrscht, ist es notwendig, den Hohlraum im Innern des Walzenmantels durch Endquerdichtungen abzudichten. Bei diesen Endquerdichtungen müssen relativ zueinander bewegte Teile zusammenwirken, was einen teilweise erheblichen Verschleiß bedingt. Der Verschleiß steigt hierbei mit der Arbeitsgeschwindigkeit der Walze an. Die Endquerdichtungen müssen nicht unbedingt dazu dienen, den Austritt von Hydraulikflüssigkeit vollständig zu unterbinden. Ihre Aufgabe liegt vielmehr darin, den Druck im Innern des Walzenmantels auf einem bestimmten Wert aufrechtzuerhalten.

WO 95/08067 A1 zeigt ein Radial- und Druck-Lagersystem für eine Welle, die drehbar in einem Lagergehäuse gelagert ist. Die Welle weist zwei konusförmige Flansche mit Lagerflächen auf. Mit den Flanschen zusammen wirken Lagerelemente, in deren Lagerflächen hydrostatische Lagertaschen ausgebildet sind. Die Lagerelemente werden durch eine Druckfeder und durch Druckkammern, die über ein Pilotventil versorgt werden, in Richtung auf die Flansche gedrückt.

Der Erfindung liegt die Aufgabe zugrunde, eine Endquerdichtung für den Innenraum zur Verfügung zu stellen, die auch bei höheren Geschwindigkeiten verschleißarm arbeitet.

Diese Aufgabe wird bei einer Druckbehandlungswalze der eingangs genannten Art dadurch gelöst, daß die Lageranordnung mit einer vorbestimmten, axial gerichteten Kraft beaufschlagt ist, die bei Ausbleiben des hydrostatischen Drucks den Spalt im wesentlichen vollständig schließt.

Die axial gerichtete Kraft wirkt also dem hydrostatischen Druck, der im Spalt herrscht, entgegen. Damit läßt sich die Dicke des Spaltes auf einen vorbestimmten Wert einstellen oder halten. Wenn der hydrostatische Druck abfällt oder sogar ausbleibt, beispielsweise bei einer Unterbrechung des Betriebs (im Stillstand), dann wird der Spalt durch die axial wirkende Kraft geschlossen, so daß durch den Spalt keine Hydraulikflüssigkeit aus dem hohlen Innenraum des Walzenmantels entweichen kann. Im Betrieb kann ebenfalls keine Flüssigkeit aus dem Hohlraum entweichen, weil im Spalt der hydrostatische Druck herrscht, der in der Regel mindestens genauso groß ist wie der hydraulische Druck im Hohlraum des Walzenmantels. Zwar wird durch den Spalt Hydraulikflüssigkeit nach außen treten, ein Druckverlust im Innern des Walzenmantels ist damit jedoch nicht verbunden.

Vorteilhafterweise weist die Lageranordnung mindestens ein Lager mit Innenring und Außenring auf, wobei einer der beiden Ringe zweigeteilt ist und der radial innere Teil auf seiner radialen Außenseite eine konkave Wölbung und der radiale äußere Teil eine daran angepaßte konvexe Wölbung aufweist. Beide Wölbungen wirken also so zusammen, daß der äußere Ring auf dem inneren Ring oder der innere Ring im äußeren Ring eine Kippbewegung durchführen kann. Damit trägt man der Tatsache Rechnung, daß sich der Träger, der den Walzenmantel durchsetzt, bei Belastung durchbiegen kann. Der Träger hat dann an den Enden, wo das oder die Lager angeordnet sind, eine gewisse Neigung, so daß seine Achse dort nicht mehr mit der Rotationsachse des Walzenmantels übereinstimmt. Durch die beschriebene Ausbildung wird dieses Kippen zugelassen, ohne daß zusätzlicher Verschleiß entsteht.

Vorzugsweise ist der Radius der Wölbung konstant. Damit lassen sich besonders große Kippwinkel realisieren, ohne daß die Gefahr besteht, daß der Druck im Innenraum an dieser Stelle, d.h. an der Berührungsfläche zwischen Innenring und Außenring, entweichen kann.

Mit Vorteil ist der Innenring geteilt. Wenn sich der Träger dann durchbiegt, stellt sich der Innenring einmal schief, d.h. wird gegenüber dem Außenring gekippt. Weitere Bewegungen müssen erst bei einer Änderung der Durchbiegung des Trägers erfolgen. Würde der Außenring geteilt sein, dann müßte eine Kippbewegung bei jeder Umdrehung der Walze erfolgen.

Mit Vorteil ist eine hydraulische Kolben-Zylinder-Anordnung zur Erzeugung der Kraft vorgesehen. Mit einer hydraulischen Kolben-Zylinder-Anordnung läßt sich eine konstante Kraft über einen gewissen Verstellweg aufrechterhalten. Die Kraft läßt sich leicht der Größe nach einstellen, so daß man die Kraft an unterschiedliche Betriebsbedingungen anpassen kann.

Mit Vorteil weist die Lageranordnung ein Festlager und ein Loslager auf und die Kolben-Zylinder-Anordnung wirkt auf das Loslager. Damit kann man mit Hilfe der Kolben-Zylinder-Anordnung, die dazu über den notwendigen Stellweg verfügen muß, auch bei einer Verschiebung des Loslagers die notwendige Kraft aufbringen.

Mit Vorteil weist die Lageranordnung zwei hydrostatische Lager auf, deren Spalte mit entgegengesetztem Neigungswinkel konisch geneigt sind. Man kommt also pro Lager mit einem einzigen Spalt aus, in dem die hydrostatische Abstützung erfolgt, d.h. in denen eine unter Druck stehende Hydraulikflüssigkeit zugeführt werden muß. Dies vereinfacht die Leitungsführung und die Steuerung. Die größte Kraftkomponente wird in den meisten Fällen radial gerichtet sein. Dementsprechend wird der Neigungswinkel zur Rotationsachse des Walzenmantels in der Regel kleiner als 45° sein. Wenn man die Flächennormale, d.h. eine Gerade, die senkrecht auf der Lagerfläche steht, in eine radiale und eine axiale Komponente unterteilt, dann wird die axiale Komponente wesentlich kleiner als die radiale Komponente sein. Bei dieser Ausbildung wird der Walzenmantel durch die beiden Lager zangenartig fixiert und zwar auch dann, wenn er sich beispielsweise aufgrund von Temperatureinflüssen in der Länge ändert. In diesem Fall verschiebt sich das gesamte Loslager. Die axial wirkende Kraft hält die Spalte in den beiden hydrostatischen Lagern aber nach wie vor auf einem vorbestimmten Wert.

In einer anderen Ausgestaltung weist die Lageranordnung mindestens ein hydrostatisches Lager auf, das zwei senkrecht zur Axialrichtung und einen in Umfangsrichtung verlaufenden Spalt aufweist. Diese Ausgestaltung entspricht im wesentlichen der aus DE 33 48 209 C2 bekannten. Durch die axial wirkende Kraft werden aber die Spalte immer "dicht" gehalten, d.h. sie sind entweder geschlossen, wenn der hydrostatische Druck ausbleibt, oder sie sind automatisch auf einen optimalen Wert eingestellt, wenn die hydrostatische Wirkung eintritt.

Hierbei ist besonders bevorzugt, daß auf einem Lagergehäuse ein Lagerring angeordnet ist, der zwischen einem Vorsprung und einem Druckring axial eingespannt ist. Das Lager bildet also eine Einheit, die als Ganzes gehandhabt werden kann und bei der man beispielsweise das Trägergehäuse auf den Träger aufschieben kann. Die axial gerichtete Kraft wirkt dann auf den Druckring, der den Lagerring, der mit dem Walzenmantel in Verbindung steht, axial festhält.

Hierbei ist von Vorteil, daß eine Druckfeder auf den Druckring wirkt. Eine derartige Druckfeder kann beispielsweise als Tellerfeder ausgebildet sein. Da bei dieser Ausgestaltung keine größeren Längenänderungen innerhalb eines Lagers auftreten, kann man durch eine Vorspannung der Druckfeder einen festen Wert der Kraft einstellen, der dann im Betrieb aufrechterhalten bleibt. In diesem Fall muß man eine derartige Einheit als Festlager und die andere Einheit als Loslager ausbilden, die auf dem Träger verschiebbar ist.

Mit Vorteil weist die Gegenfläche eine Lagertasche auf, die in einem gegenüber dem Träger undrehbaren Bauteil angeordnet ist. Dies erleichtert die Zufuhr der für den Aufbau des hydrostatischen Drucks erforderlichen hydraulischen Druckflüssigkeit.

Mit Vorteil ist das Loslager auf dem Träger hydrostatisch gelagert. Gegebenenfalls kann eine Drehmomentstütze erforderlich sein, um ein Mitdrehen des Lagers auf dem Träger zu verhindern. Die hydrostatische Lagerung des Lagers auf dem Träger erlaubt eine leichtere Axialverschiebbarkeit. Da ohnehin Hydraulikflüssigkeit unter Druck zur Verfügung steht, ist für die hydrostatische Lagerung des Lagers auf dem Träger kein größerer Zusatzaufwand zu treiben.

Die Erfindung wird im folgenden anhand von bevorzugten Ausführungsbeispielen in Verbindung mit der Zeichnung näher beschrieben. Hierin zeigen:
- Fig. 1: eine erste Ausbildung einer Walze und
- Fig. 2: eine zweite Ausbildung einer Walze.

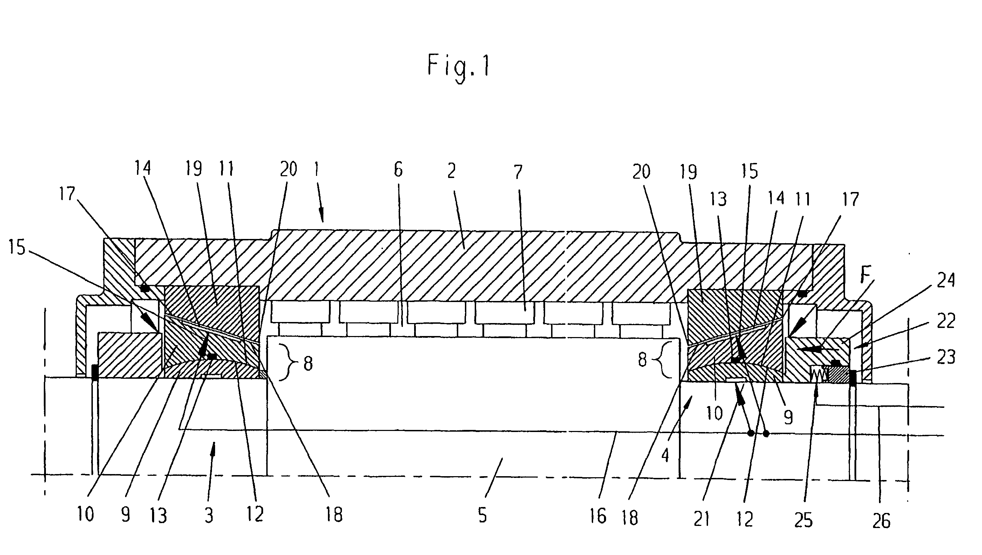

Eine Walze 1 nach Fig. 1 weist einen hohlen Walzenmantel 2 auf, der über ein erstes hydrostatisches Lager 3 und ein zweites hydrostatisches Lager 4 auf einem Träger 5, der auch als Querhaupt bezeichnet werden kann, drehbar gelagert ist. Im hohlen Innenraum 6 des Walzenmantels 2 sind zwischen dem Träger 5 und dem Walzenmantel 2 mehrere hydrostatische Stützelemente 7 angeordnet. Im übrigen kann der Innenraum 6 in nicht näher dargestellter, aber an sich bekannter Weise in Umfangsrichtung unterteilt sein und abschnittsweise unter Druck gesetzt werden, beispielsweise indem eine Hydraulikflüssigkeit einer Hälfte des Innenraums zugeführt wird. In diesem Fall können die Stützelemente entweder zu einer Verstärkung oder zu einer Abschwächung der vom hydraulischen Druck im Innenraum 6 hervorgerufenen Kraft dienen.

Die Lager 3, 4 sind gleich ausgebildet.

Jedes Lager 3, 4 weist einen Innenring 8 auf, der einen radial inneren Teil 9 und einen radial äußeren Teil 10 aufweist. Der radial innere Teil 9 ist auf dem Träger 5 angeordnet. Er weist an seiner radial äußeren Seite eine kugelkalottenförmige Fläche 11 auf, also eine Fläche 11, die im dargestellten Schnitt eine konvexe Wölbung mit konstantem Radius aufweist. Der radial äußere Teil 10 weist an seiner radialen Innenseite eine entsprechend konkave Wölbung 12 auf. Die Berührungsfläche zwischen den beiden Flächen 11, 12 kann durch eine Dichtung 13 abgedichtet sein. Durch die Wölbung der Flächen 11, 12 ist es möglich, daß der innere Teil 9 gegenüber dem äußeren Teil 10 des Innenringes etwas gekippt werden kann, um eine Durchbiegung des Trägers 5 gegenüber dem Walzenmantel 2 zu ermöglichen.

Auf der radialen Außenseite des Innenringes 8 ist eine Lagertasche 14 angeordnet, die über eine Drossel 15 mit einer Zuführleitung 16 in Verbindung steht. Die Außenseite des Innenringes wird im folgenden auch als Gegenfläche 17 bezeichnet, die mit einer Lagerfläche 18 eines Außenringes 19 einen Spalt 20 bildet. Der Spalt 20 ist konusförmig ausgebildet, d.h. er bildet einen Teil einer Kegelmantelfläche, wobei die beiden Spalte 20 der Lager 3, 4 zur axialen Mitte des Trägers 5 hin geneigt sind. Dementsprechend hat eine Flächennormale, also eine Gerade, die senkrecht auf der Lagerfläche 18 steht, eine Komponente, die in Radialrichtung weist und eine kleinere Komponente, die in Axialrichtung weist.

Der Außenring 19 ist fest mit dem Walzenmantel 2 verbunden.

Das Lager 3 ist als Festlager ausgebildet, d.h. der radial innere Teil 9 des Innenringes 8 ist in Axialrichtung und in Umfangsrichtung stationär auf dem Träger 5 gehalten.

Das Lager 4 ist als Loslager ausgebildet, d.h. der radial innere Teil 9 des Innenringes 8 ist in Axialrichtung auf dem Träger 5 verschiebbar. Er weist hierzu eine Lagertasche 21 auf, die über eine Drossel mit der Leitung 16 verbunden ist. In nicht näher dargestellter Weise ist eine Drehmomentstütze vorgesehen, um ein Mitdrehen des Innenrings 8 zu verhindern.

Der innere Teil 9 des Innenringes 8 ist durch eine Kolben-Zylinder-Anordnung 22 mit einer Kraft F beaufschlagbar, die in Axialrichtung wirkt.

Hierzu weist die Kolben-Zylinder-Anordnung 22 einen auf dem Träger 5 festgelegten Kolben 23 und einen diesen umgebenden Ringzylinder 24 auf. Kolben 23, Ringzylinder 24 und Träger 5 umgrenzen zusammen einen Arbeitsraum 25, der über eine Leitung 26 unter einen vorbestimmten hydraulischen Druck gesetzt werden kann. In dem Arbeitsraum 25 kann noch eine Feder angeordnet sein, die den Ringzylinder 24 in Richtung der Kraft F vorspannt.

Wenn der Druck in der Leitung 16 abgesenkt wird oder ausfällt, dann schiebt der Ringzylinder 24 den Innenring 8 des Loslagers 4, z.B. unter der Wirkung der Feder, axial auf das Festlager 3 zu. Hierdurch werden die beiden Spalte 20 der Lager 3, 4 geschlossen. Wenn nun in der Leitung 16 hydraulischer Druck herrscht, der zur hydrostatischen Abstützung der Lagerflächen 18 notwendig ist, dann muß der hydrostatische Druck auch die Kraft F überwinden. Bei einer entsprechenden Einstellung des Drucks im Arbeitsraum 25 kann man daher die Größe der Spalte 20 auf einen optimalen Wert einstellen. Der Druck im Arbeitsraum 25 kann auf einem konstanten Wert gehalten werden und zwar unabhängig von dem Stellweg, den das Loslager 4 bei einer Längenänderung des Walzenmantels 2 zurückgelegt hat.

Es ist dargestellt, daß die Lagertasche 21 an der gleichen Leitung 16 angeschlossen ist wie die Lagertaschen 14. Natürlich ist hier eine eigene Versorgung möglich.

Durch die Unterteilung des Innenringes 8 wird ein relativ verschleißarmes Arbeiten ermöglicht. Wenn sich der Träger 5 durchbiegt, dann ist nur eine einzige Bewegung zwischen den beiden Teilen 9, 10 des Innenringes 8 erforderlich, um einen neue Einstellung zu erreichen.

Die beiden Lager 3, 4 wirken gleichzeitig als Endquerdichtung. Durch den Spalt 20 kann im Betrieb kein Druck aus dem Innenraum 6 entweichen, weil im Spalt 20 ein entsprechender Gegendruck herrscht.

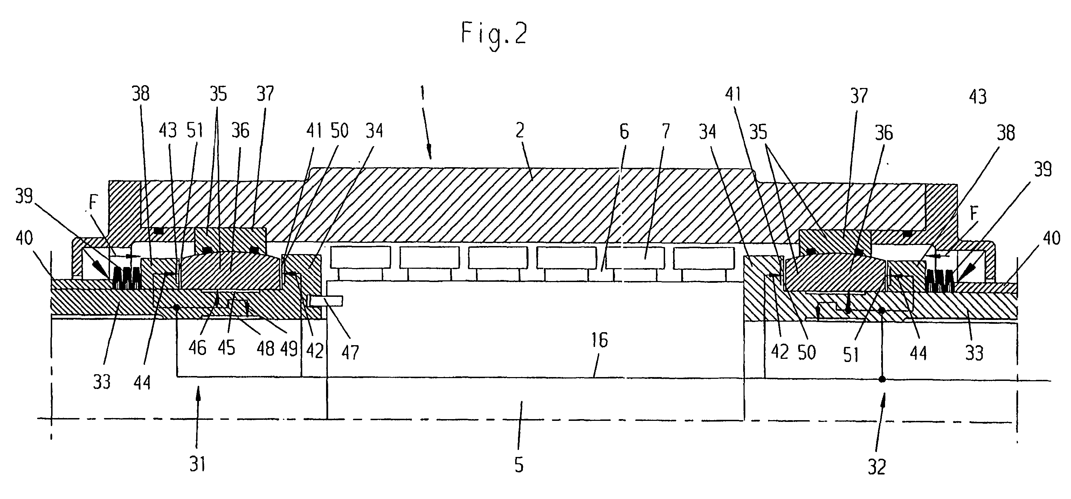

Fig. 2 zeigt eine weitere Ausgestaltung, bei der gleiche Teile mit gleichen Bezugszeichen versehen sind.

Unterschiedlich sind hier die Lager 31, 32. Auch die Lager 31, 32 sind gleich aufgebaut. Jedes Lager 31, 32 weist ein Lagergehäuse 33 auf, das an seiner axialen Innenseite einen Vorsprung 34 aufweist. Das Lagergehäuse 33 bildet den Innenring der Lager 31, 32. Auf dem Lagergehäuse 34 ist ein als Außenring dienender Lagerring 35 drehbar angeordnet, der ebenfalls zweigeteilt ist. Der radial innere Teil 36 trägt auf seiner radialen Außenseite eine kugelkalottenförmige Lagerfläche, auf der der radial äußere Teil 37 des Lagerringes 35 aufliegt. Der radial äußere Teil 37 des Lagerringes 35 ist mit dem Walzenmantel 2 axial und in Drehrichtung fest verbunden. Dementsprechend kann der radial innen liegende Teil 36 gegenüber dem radial außen liegenden Teil 37 des Lagerringes 35 etwas kippen, wenn sich der Träger 5 gegenüber dem Walzenmantel 2 durchbiegt. Allerdings erfolgt hier bei jeder Umdrehung der Walze eine Axialkippbewegung des äußeren Teils 37 gegenüber dem inneren Teil 36.

Der Lagerring 35, genauer gesagt sein radialer Innenteil 36, wird auf dem Lagergehäuse 33 durch einen Druckring 38 gegen den Vorsprung 34 gedrückt und zwar mit Hilfe einer Tellerfeder 39, die als Druckfeder ausgebildet ist. Die Tellerfeder 39 stützt sich an einem Vorsprung 40 auf dem Lagergehäuse 33 ab. Der Vorsprung 40 ist in Axialrichtung auf dem Lagergehäuse 33 verstellbar, beispielsweise mit Hilfe eines nicht näher dargestellten Schraubgewindes.

Der Vorsprung 34 ist an seiner dem Lagerring 35 zugewandten Seite mit einer Drucktasche 41 versehen, die über eine Drossel 42 mit der Zuleitung 16 in Verbindung steht. In ähnlicher Weise ist der Druckring 38 mit einer Lagertasche 43 versehen, die über eine Drossel 44 mit der Leitung 16 in Verbindung steht. Das Lagergehäuse 33 ist schließlich auf der radialen Außenseite, d.h. auf seiner Umfangsfläche mit einer Lagertasche 45 versehen, die über eine Drossel 46 mit der Leitung 16 in Verbindung steht. Wenn in der Leitung 16 Hydraulikflüssigkeit unter einem bestimmten Druck zugeführt wird, dann entstehen im Bereich der Lagertaschen 41, 43 Spalte 50, 51, durch die die Hydraulikflüssigkeit abfließen kann, um eine hydrostatische Lagerung des Außenringes 35 auf dem Lagergehäuse 33 zu ermöglichen. Diese Spalte 50, 51 werden durch die Kraft der Feder 39 auf eine günstige oder sogar optimale Größe eingestellt.

Im vorliegenden Fall ist das Lager 31 als Loslager ausgebildet, das in Axialrichtung auf dem Träger 5 verschiebbar ist. Eine Drehmomentstütze 47 verhindert ein Mitdrehen des Lagergehäuses 33 auf dem Träger 5. Auch das Lagergehäuse 33 weist eine Lagertasche 48 auf, die über eine Drossel 49 mit der Leitung 16 verbunden ist, so daß auch das Lagergehäuse 33 des Loslagers 31 hydrostatisch auf dem Träger 5 abgestützt ist.

Bei dieser Ausgestaltung ist jeder Außenring 35 in einem eigenen Lagergehäuse 33 aufgenommen, so daß jeder Außenring 35 axial beidseitig hydrostatisch abgestützt ist. Dementsprechend muß das gesamte Lager 31 verschiebbar sein.

Bei den in Fig. 1 und 2 dargestellten Ausführungsformen ist der Walzenmantel 2 zum Querhaupt 5 hin zentriert. Eine derartige Walze wird auch als C-Typ bezeichnet. Hier sind dann die Lageranordnungen 3, 4 fest auf dem Querhaupt 5 angeordnet.

Wenn man hingegen eine Walze mit Mantelhub wünscht, dann kann man die Lageranordnungen 3, 4 auf einem Träger befestigen, der in einer Ebene relativ zum Querhaupt bewegbar ist. In diesem Fall kann man den Walzenmantel 2 unter der Wirkung der Stützelemente 7 anheben oder absenken, d.h. die Ausrichtung der Rotationsachse des Walzenmantels 2 zur Mittelachse des Querhaupts 5 verändern.

## Patentansprüche

1. Druckbehandlungswalze mit einem Walzenmantel, der über eine Lageranordnung drehbar auf einem Träger gelagert ist, wobei die Lageranordnung mindestens eine hydrostatisch abgestütze Lagerfläche aufweist, die mit einer Gegenfläche einen Spalt bildet und deren Flächennormale zumindest eine axial gerichtete Komponente aufweist, **dadurch gekennzeichnet, daß** die Lageranordnung (3, 4; 31, 32) mit einer vorbestimmten, axial gerichteten Kraft (F) beaufschlagt ist, die bei Ausbleiben des hydrostatischen Drucks den Spalt (20; 50, 51) im wesentlichen vollständig schließt.

2. Walze nach Anspruch 1, **dadurch gekennzeichnet, daß** die Lageranordnung (3, 4; 31, 32) mindestens ein Lager mit Innenring (8, 33) und Außenring (19, 35) aufweist, wobei einer der beiden Ringe zweigeteilt ist und der radial innere Teil (9; 36) auf seiner radialen Außenseite eine konkave Wölbung und der radiale äußere Teil (10; 37) eine daran angepaßte konvexe Wölbung aufweist.

3. Walze nach Anspruch 2, **dadurch gekennzeichnet, daß** der Radius der Wölbung konstant ist.

4. Walze nach Anspruch 2 oder 3, **dadurch gekennzeichnet, daß** der Innenring (8) geteilt ist.

5. Walze nach einem der Ansprüche 1 bis 4, **dadurch gekennzeichnet, daß** eine hydraulische Kolben-Zylinder-Anordnung (22) zur Erzeugung der Kraft (F) vorgesehen ist.

6. Walze nach Anspruch 5, **dadurch gekennzeichnet, daß** die Lageranordnung ein Festlager (3) und ein Loslager (4) aufweist und die Kolben-Zylinder-Anordnung (22) auf das Loslager (4) wirkt.

7. Walze nach einem der Ansprüche 1 bis 6, **dadurch gekennzeichnet, daß** die Lageranordnung zwei hydrostatische Lager (3, 4) aufweist, deren Spalte (20) mit entgegengesetztem Neigungswinkel konisch geneigt sind.

8. Walze nach einem der Ansprüche 1 bis 6, **dadurch gekennzeichnet, daß** die Lageranordnung (31, 32) mindestens ein hydrostatisches Lager aufweist, das zwei senkrecht zur Axialrichtung und einen in Umfangsrichtung verlaufenden Spalt (50, 51) aufweist.

9. Walze nach Anspruch 8, **dadurch gekennzeichnet, daß** auf einem Lagergehäuse (33) ein Lagerring (35) angeordnet ist, der zwischen einem Vorsprung (34) und einem Druckring (38) axial eingespannt ist.

10. Walze nach Anspruch 9, **dadurch gekennzeichnet, daß** eine Druckfeder (39) auf den Druckring (38) wirkt.

11. Walze nach einem der Ansprüche 1 bis 10, **dadurch gekennzeichnet, daß** die Gegenfläche (17) eine Lagertasche (14) aufweist, die in einem gegenüber dem Träger (5) undrehbaren Bauteil angeordnet ist.

12. Walze nach einem der Ansprüche 1 bis 11, **dadurch gekennzeichnet, daß** das Loslager (4, 31) auf dem Träger (5) hydrostatisch gelagert ist.

## Claims

1. Pressure treatment roll having a roll shell which is rotatably mounted on a support via a bearing arrangement, the bearing arrangement having at least one hydrostatically supported bearing surface which forms a gap with an opposing surface and whose surface normal has at least one axially oriented component, **characterized in that** the bearing arrangement (3, 4; 31, 32) is acted on with a predetermined, axially oriented force (F) which, when the hydrostatic pressure is absent, closes the gap (20; 50, 51) substantially completely.

2. Roll according to Claim 1, **characterized in that** the bearing arrangement (3, 4; 31, 32) has at least one bearing with an inner ring (8, 33) and an outer ring (19, 35), one of the two rings being divided in two and the radially inner part (9; 36) having a concave curvature on its radial outer side, and the radial outer part (10; 37) having a convex curvature matched thereto.

3. Roll according to Claim 2, **characterized in that** the radius of curvature is constant.

4. Roll according to Claim 2 or 3, **characterized in that** the inner ring (8) is divided.

5. Roll according to one of Claims 1 to 4, **characterized in that** a hydraulic piston-cylinder arrangement (22) is provided to produce the force (F).

6. Roll according to Claim 5, **characterized in that** the bearing arrangement has a fixed bearing (3) and a loose bearing (4), and the piston-cylinder arrangement (22) acts on the loose bearing (4).

7. Roll according to one of Claims 1 to 6, **characterized in that** the bearing arrangement has two hydrostatic bearings (3, 4), whose gaps (20) are inclined conically with an opposite angle of inclination.

8. Roll according to one of Claims 1 to 6,
**characterized in that** the bearing arrangement (31, 32) has at least one hydrostatic bearing which has two gaps (50, 51) running at right angles to the axial direction and one running in the circumferential direction.

9. Roll according to Claim 8, **characterized in that** a bearing ring (35), which is clamped axially in between a projection (34) and a pressure ring (38), is arranged on a bearing housing (33).

10. Roll according to Claim 9, **characterized in that** a compression spring (39) acts on the pressure ring (38).

11. Roll according to one of Claims 1 to 10, **characterized in that** the opposing surface (17) has a bearing pocket (14) which is arranged in a component which cannot rotate with respect to the support (5).

12. Roll according to one of Claims 1 to 11, **characterized in that** the loose bearing (4, 31) is mounted hydrostatically on the support (5).

## Revendications

1. Rouleau de traitement par pression comprenant une enveloppe de rouleau qui est montée à rotation sur un support par le biais d'un agencement de paliers, l'agencement de paliers présentant au moins une surface de palier supportée par voie hydrostatique, qui forme une fente avec une surface conjuguée et dont la normale à la surface présente au moins une composante orientée axialement, **caractérisé en ce que** l'agencement de paliers (3, 4; 31, 32) est sollicité par une force (F) prédéterminée, orientée axialement, qui ferme substantiellement complètement la fente (20; 50, 51) en l'absence de la pression hydrostatique.

2. Rouleau selon la revendication 1, **caractérisé en ce que** l'agencement de paliers (3, 4; 31, 32) présente au moins un palier avec une bague interne (8, 33) et une bague externe (19, 35), l'une des deux bagues étant partagée en deux et la partie radialement interne (9; 36) présentant sur son côté extérieur radial une courbure concave et la partie radialement extérieure (10 ; 37) présentant une courbure convexe adaptée à celle-ci.

3. Rouleau selon la revendication 2, **caractérisé en ce que** le rayon de la courbure est constant.

4. Rouleau selon la revendication 2 ou 3, **caractérisé en ce que** la bague interne (8) est partagée.

5. Rouleau selon l'une quelconque des revendications 1 à 4, **caractérisé en ce qu'**il est prévu un agencement cylindre-piston hydraulique (22) pour produire la force (F).

6. Rouleau selon la revendication 5, **caractérisé en ce que** l'agencement de paliers présente un palier fixe (3) et un palier libre (4) et l'agencement cylindre-piston (22) agit sur le palier libre (4).

7. Rouleau selon l'une quelconque des revendications 1 à 6, **caractérisé en ce que** l'agencement de paliers présente deux paliers hydrostatiques (3, 4) dont les fentes (20) sont inclinées de manière conique avec un angle d'inclinaison opposé.

8. Rouleau selon l'une quelconque des revendications 1 à 6, **caractérisé en ce que** l'agencement de paliers (31, 32) présente au moins un palier hydrostatique qui présente deux fentes perpendiculaires dans la direction axiale et une fente s'étendant dans la direction périphérique (50, 51).

9. Rouleau selon la revendication 8, **caractérisé en ce que** l'on dispose sur un boîtier de palier (33) une bague de palier (35) qui est serrée axialement entre une saillie (34) et une bague de compression (38).

10. Rouleau selon la revendication 9, **caractérisé en ce qu'**un ressort de compression (39) agit sur la bague de compression (38).

11. Rouleau selon l'une quelconque des revendications 1 à 10, **caractérisé en ce que** la face conjuguée (17) présente une cavité de palier (14) qui est disposée dans un composant non rotatif par rapport au support (5).

12. Rouleau selon l'une quelconque des revendications 1 à 11, **caractérisé en ce que** le palier libre (4, 31) est monté sur le support (5) de manière hydrostatique.
